# EUROPEAN PATENT APPLICATION

(11) **EP 4 361 838 A1**
(43) Date of publication of application: **01.05.2024**
(21) Application number: 22204418.2
(22) Date of filing: 28.10.2022
(51) Int. Cl.: G06F 16/248

(54) **CAPTURING PROCESS DATA VISUALIZATIONS**

(71) Applicant: Celonis SE, 80333 München (DE)
(72) Inventor: Ullrich, Carolin, 80333 München (DE); Kathe, Moritz, 80333 München (DE); Williams, Brian, New York, 10007 (US); Ergül, Mehmet, 80333 München (DE)
(74) Representative: 2s-ip Schramm Schneider Bertagnoll Patent- und Rechtsanwälte Part mbB

(57) **Abstract**

The present invention relates to a method to capture a data visualization of an analysis of continuously accumulating process data. Accordingly, interesting process data points, also termed insight, may be captured such that the insight may be shared and/or represented using the original settings at any later point in time. As a result, the entire data visualization is available in its original state, i.e., preserved, for a subsequent exploration at a later point in time.

## Description

### Scope of the invention

The present invention relates to a method to capture a data visualization of an analysis of continuously accumulating process data.

### Background of the invention

It is known that value can be created from insights of recorded process data using state-of-the art process mining tools. To create value, the process mining tool usually offers dashboards and other forms of data visualizations to find interesting process data points, i.e., executions of processes, also termed process instances or cases. Further, these findings are validated, and root causes defined. After having decided on possible actions to improve bottlenecks in a process instance, action is taken, and relevant key performance indicators (KPIs) are measured over time to quantify progress in refining the executions of the corresponding process.

Capturing interesting process data points in time is very important for validating a finding, sharing, and discussing it with others, as well as creating a baseline against which to measure progress in refining the analyzed process.

It is, however, not possible, to capture interesting process data points in time in state-of-the-art process mining tools without loss of functionality. So far, it is common practice to capture screenshots or bookmarks of specific data visualizations.

Saving data visualizations as screenshots has several disadvantages: first, access to the screenshots needs to be managed separately as the screenshots are not stored within the process mining tool from which it originates. Second, screenshots are static in nature such that no additional information can be retrieved. Third, only the fraction of the window that was captured by the screenshot is visible. Fourth, it may be unclear which for the settings have led to the screenshot of the finding. Fifth, collaboration is abstracted from the process mining tool which makes tracking of communication and/or progress in refining the analyzed process essentially impossible.

A bookmarking functionality as offered by state-of-the art process mining tools allows the user to save applied filters, queries, and other dashboards settings to apply these later again on the process data. Hence, recurring analysis using a certain set of filters, breakdowns, user inputs and dashboard configurations may be performed with minimum manual effort. Bookmarks may even be shared between users. However, a bookmark only saves handles to reproduce a result. Due to the dynamic nature of the underlying process data, however, the same bookmark will most likely lead to different results at different points in time, meaning that the exact same process data visualization that was intended to be captured cannot be reproduced again. Hence, a user creating the bookmark might see a different result then a collaborator to which the bookmark is shared and who uses the bookmark.

### Object of the invention

It is therefore an object of the present invention to provide a computer-implemented method for capturing a data visualization of process data in a way that at least reduces the above identified problems in state-of-the-art process mining tools.

### Solution according to the invention

This object is solved by the computer-implemented method according to the independent claim 1. Advantageous embodiments and aspects of the invention are specified in the respective dependent claims.

Accordingly, provided is a computer-implemented method to capture a data visualization of continuously accumulating process data. The method comprises receiving a query result generated by executing at least one query statement on the process data, receiving a configuration for the visualization, and storing the query result and the configuration in a storage device. The stored query result and the stored configuration is loaded by way of an executer. Further, a copy of the data visualization is generated by the executer and provided by way of a second graphical interface of a user interface.

This method has the technical advantage that the identical data visualization capturing an interesting process data point, also termed insight, may be represented using the original settings at any later point in time. The visualization settings may enable an interactive exploration of the query result whenever a copy of the data visualization is generated from the stored query result and the stored configuration. In other words, the entire data visualization is available in its original state, i.e., preserved, for a subsequent exploration at a later point in time. Thereby, the disadvantages of screenshot, which only offer specific and static views on the captured data points, are overcome.

A further advantage of the method according to the invention is given by avoiding to re-execute the at least one query statement for every generation of the data visualization since the stored query result is simply loaded from the storage device. In particular, the storage device is the main memory. In any case, loading the stored query result is computationally cheaper than executing the at least one query statement again on the process data, even in case the process data is limited to a coverage period set by the original execution of the at least one query statement. Usually, the query result forms only a small fraction of the process data and thus its storage does not require significant extra storage capacity. On the contrary, each execution of the at least one query statement contributes equally to the costs related to the processing time.

Further, a data visualization captured by the method according to the invention may be shared to a collaborator in a way that enables the collaborator to interact with the data visualization of the query result in essentially the same manner as the one who generated the query result in first place.

The method according to the invention may be implemented, e.g., as a micro-service of a process mining tool. Consequently, the query result capturing an interesting data point may be stored within the same process mining tool, i.e., a storage device of the process mining tool. Hence, the stored query result is manageable within the same process mining tool from which it originates which strongly simplifies the compliance with data protection rules. Capturing data visualizations of interesting process data points using the method according to the invention therefore is also more efficient in terms of organization.

In one preferred embodiment, the method further comprises receiving the at least one query statement and storing the at least one query statement in the storage device.

Preferably, the method further comprises generating, on request of a user, a current query result by executing the at least one stored query statement on the process data. By way of the executer, the configuration is loaded, and a current data visualization is generated using the current query result and the loaded configuration. The generated current data visualization is provided by way of a third graphical interface of the user interface.

The current query result thus contains all queried process data up to the time of the user request and therefore is also called live query result, wherein its visualization is called live data visualization, accordingly.

While the at least one query statement is not required for generating a visualization of the stored query result, the at least one stored query statement provides a link to live data. In other words, the stored query result may be executed again at a later point in time on the process data which accumulated in the meantime, resulting in a new query result. The new query result is generated on basis of the process data up to the later point in time at which the at least one stored query statement is executed again. The stored query result, however, is based on the process data up to the point in time at which the query result was generated. Storing the at least one query statement therefore provides the additional advantage that users may instantly compare a stored query result to its current version, e.g., to efficiently track progress on a finding.

Preferably, the data visualization to be captured is generated during execution of a process mining question for an analysis of the process data and provided by way of a first interface of the user interface.

In one embodiment, the at least one stored query statement is executed, by way of an executer, on at least one data model which is generated from the process data and updated continuously.

Organizing the process data in at least one data model which is updated continuously as the process data accumulates has the advantage that the at least one query statement may be executed more efficiently, since data model inherent optimizations may be applied.

Preferably, the method further comprises generating at least one logical component, which is stored in the storage device and assigned to the data visualization. The query result and the configuration of the data visualization are stored in at least one attribute of the logical component.

In other words, each logical component represents a captured process data visualization, i.e., an insight into the recorded process data.

In one particularly preferred embodiment, the first graphical interface of the user interface comprises a number of data visualizations. Each data visualization comprises a selection input by which the data visualization is selectable to be captured. Accordingly, the method further comprises storing, upon activating the selection input of at least one data visualization, the query result and the configuration of the respective data visualization in the at least one attribute of the corresponding logical component such that the copy of each selected data visualization may be generated independently.

Structuring the first graphical interface of the user interface into a number of data visualization enables to represent multiple aspects of an analysis result to the corresponding process mining question. In this way, the analysis result becomes better accessible to the user. Further, individual aspects of the analysis result may be captured on a granular basis, i.e., separately.

The query result which is to be stored in order to generate a copy of the data visualization may be precisely tailored to comprise only exactly the data to be visualized. Hence, each logical component is compact in the sense that it does not store any redundant data points. While providing the flexibility to select, share and unselected individual insights, the storage requirement of the logical components is reduced to a minimum.

Preferably, the user interface comprises a list interface, wherein the method further comprises generating a capture summary for each selected data visualization, wherein the capture summary is in particular a verbal description of the selected data visualization and providing a list of capture summaries by way of the list interface.

Preferably, the at least one query statement is stored in the at least one attribute of the logical component in the storage device.

By also storing the respective query statement in each logical component, the link to live data is established and may be used in a granular way, i.e., for each logical component separately.

Preferably, the configuration comprises operations of a group of operations, wherein the group consists of filters, annotations, accumulations, sorting, selections, and combinations thereof.

Preferably, the configuration of the data visualization is stored in a generic configuration file in the storage device.

Preferably, the query result and the configuration of a first data visualization are stored in the storage device at a first point in time, wherein the query result and the configuration of a second data visualization are stored in the storage device at a second point in time. The method further comprises:
- generating, by way of the executer at a time after the second point in time, a copy of the first data visualization and a copy of the second data visualization, and
- providing, by way of the second graphical interface, the copy of the first data visualization and the copy of the second data visualization.

Further preferably, the second data visualization is equal to the first data visualization.

In this embodiment, the temporal evolution of the same insight of a given process mining question may be tracked by way of a few clicks, i.e., without the necessity of the skills of a data scientist and/or data engineer.

Preferably, the logical component (5) comprises at least a first attribute, in which the query result (2) is stored, a second attribute, in which the configuration (3) is stored, and a third attribute, in which the at least one query statement (4) is stored.

### Short description of the figures

Exemplary embodiments of the method according to the invention and further aspects of the invention are explained below in combination with the figures, which show:
- Fig. 1: a schematic overview over an embodiment of the method according to the invention;
- Fig. 2: an example of a user interface representing a query result which is being captured according to an aspect of the invention;
- Fig. 3: an example for a collaborative capture of a query result according to an aspect of the invention;
- Fig. 4: an illustration of the link from a captured query result to a current query result according to an aspect of the invention; and
- Fig. 5: a schematic of an embodiment of the logical component.

### Detailed description of the invention

The underlying idea of the present invention is to provide an ability to capture an interactive data visualization of process data, also termed insight, at a specific point in time such that the same insight may be reconstructed at a later point in time.

The process data is a multidimensional large-scale data set which is recorded in at least one external computer system during executions of processes. A process comprises a number of process steps, wherein an execution of the number of process steps generates a process instance. The process data is to be understood as to grow continuously, since there are always processes executed and new processes emerging. Hence, it is a challenge to capture an interesting data point in a rapidly changing data landscape such that the data point may be later visualized and/or represented in exactly the same way as it was originally discovered.

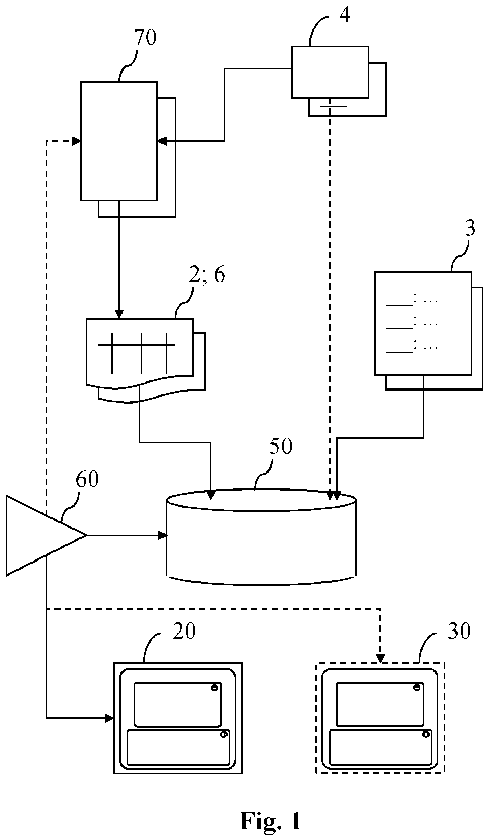

**Fig. 1** presents a schematic overview over an embodiment of the method according to the invention.

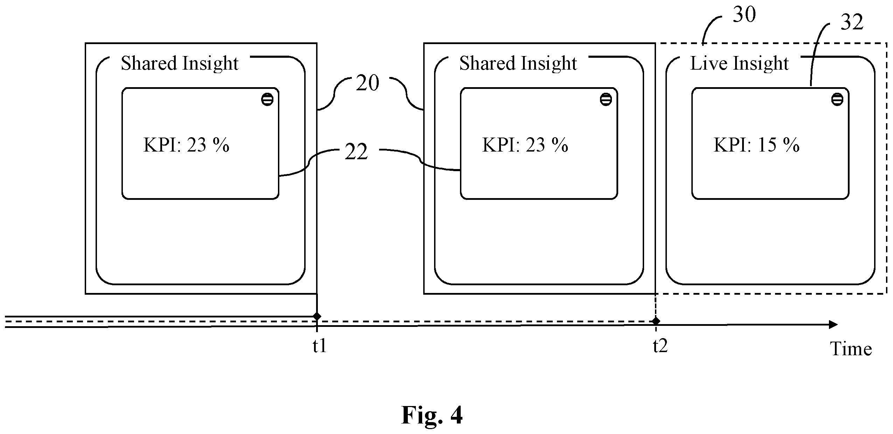

The basic functionality of the method according to the invention is achieved by the network of solid arrows shown in Fig. 1. The additional connections represented by the dashed arrows correspond to a preferred embodiment according to an aspect of the invention which will be described in more detail with respect to Fig. 4.

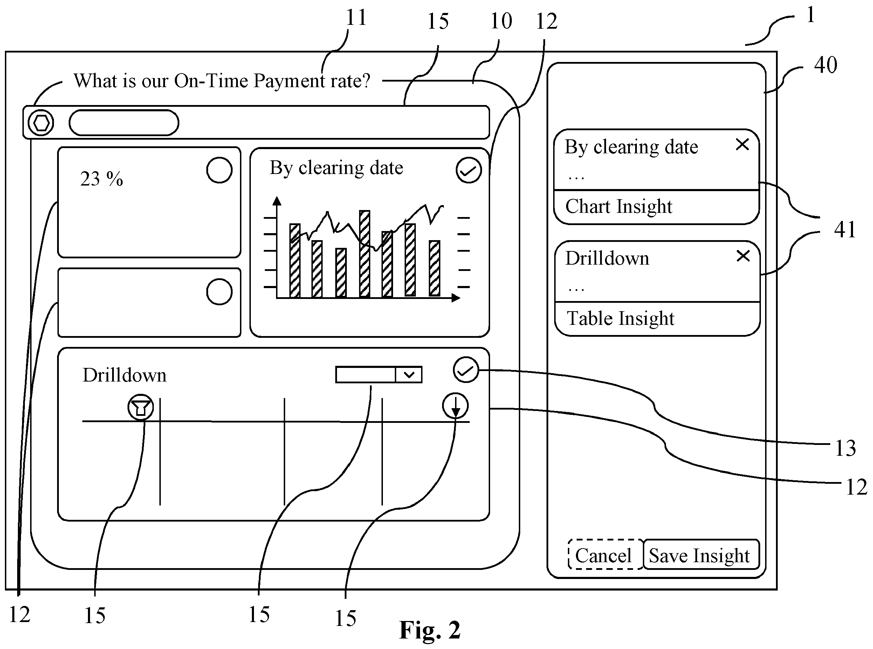

Upon selection of at least one data visualization 12; 14 which is, e.g., generated during an exploration of a process mining question 11, the corresponding query result 2 is received and stored in a storage device 50. Similarly, at least one configuration 3 of the at least one selected data visualization 12; 14 is received and stored in the storage device 50. The configuration 3 may be received, e.g., in form of a generic configuration file comprising statements that are required to (re-)generate the captured data visualization 12; 14. Examples for these statements are discussed below with respect to Fig. 2.

The storage device 50 may be a main memory, in order to increase the responsiveness of the method. Captured insights may be generated instantaneously whenever requested.

The at least one query result 2 is preferably generated by executing a number of query statements 4 in a number of data models 70 to which the process data has been transformed. Hence, storing the original query result 2 when capturing a data visualization 12; 14 has the advantage to be able to represent the data visualization at a later point in time independent of the data model 70 in which the original query result 2 was generated. Data models can vary over time such that the same query statement on basis of which the original query result was generated may throw an error at a later point in time. Using the method according to the invention, instead, the data visualization remains always available, since the corresponding query result 2 and corresponding configuration 3 are stored in the storage device 50.

The stored query result 2 and the stored configuration 3 are loaded using, e.g., an executor 60, to generate a copy of the data visualization 22; 24 of the query result 2 which matches exactly the captured data visualization 12; 14. The copy of the data visualization 22; 24 may be provided by way of a second graphical interface 20.

In one embodiment, the original data visualization 12; 14 may be part of a dashboard which comprises several components, also called snippets. Each component comprises a data visualization 12; 14 by which a specific view on the query result 2 is visualized. Preferably, each component is assigned the query result 2 required to generate the corresponding data visualization 12; 14. Hence, for capturing a modular dashboard with a number of data visualizations 12; 14, a number of query results 2 corresponding to the number of data visualizations 12; 14 and a corresponding number of configurations 3 are received and stored in the storage device 50.

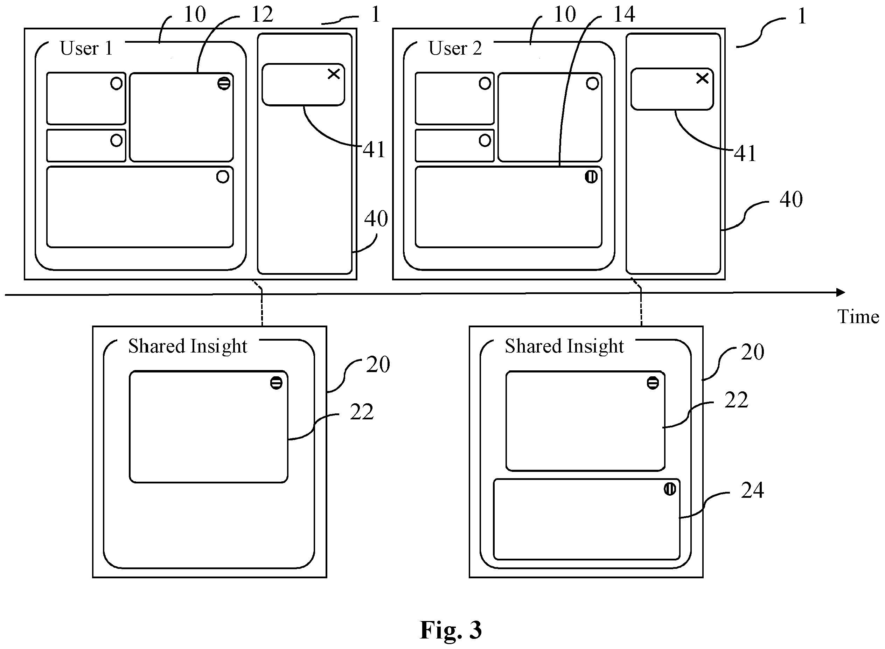

In one embodiment, each query result 2 and corresponding configuration 3 of the number of query results 2 and configurations 3 is loaded in order to generate a copy 22; 24 of the corresponding data visualization. The generated data visualization copies 22; 24 may be arranged in any combination, in particular by time of their capture, in a second graphical interface 20 of the user interface 1. The second graphical interface is also called insight view. The generated data visualization copies 22; 24 may in fact originate from original data visualizations 12; 14 of different dashboard being captured by different users at different points in time, as elaborated further with respect to Fig. 3.

**Fig. 2** provides an example of a user interface representing a query result which is being captured according to an aspect of the invention.

The user interface 1 shown in Fig. 2 presents the first graphical interface 10 which is also termed exploration view as it enables the exploration of a process mining based on a process mining question 11. The exploration view comprises a number of original data visualizations 12 being organized in a dashboard which was generated during generating answers to the process mining question 11.

The process mining question 11 of this example reads "what is our on-time payment rate?". Preferably, the process mining question of the analysis of recorded process data is answered by an executor 60 querying the process data loaded and transformed into a number of data models 70 using the corresponding query statement 4. The process mining question provides an intuitive approach to the analysis of recorded process data to the user, in particular the business user. Each question encodes a problem statement for which a solution may be found in the process data. In particular, the question may be an open question aiming at receiving an overview of processes or the question may be specific in that it queries individual key performance indicators (KPIs), such as in this example.

The exploration view 10 of Fig. 2 comprises exemplarily four original data visualizations 12. One of these original data visualizations is a number representing the on-time payment rate KPI. Another data visualization is not further specialized. One of the original data visualizations 12 is a bar chart which is overlaid with a line plot and represents the evolution of the KPI over time. The data visualization 12 at the bottom of the exploration view 10 is a table that represents process instances contributing to the KPI. In practice, question-answer explorations may comprise a different number and arrangement of original data visualizations 12, since different process mining questions may yield different answers.

The four data visualizations 12 may be generated on basis of a single query result 2, on basis of a query result 2 for each original data visualization 12, and/or on basis of a combination of these two approaches. Preferably, each of the original data visualizations 12 is assigned its own query result 2, i.e., each original data visualization is generated from the result of executing a corresponding query statement 4 in the corresponding data model 70.

Each of the four original data visualizations 12 comprises a selection input 13 which is illustrated in Fig. 2 by a circle in the top right corner. For two original data visualizations 12 the circle is filled by a checkmark which indicates in this example that the corresponding original data visualization 12 is selected to be captured. As a result, for the two selected original data visualizations 12 the corresponding query result 2 is stored in the storage device 50. Additionally, the configurations 3 of the two selected original data visualizations 12 as stored in the storage device 50.

Accordingly, a capture summary 41 is provided and stored in a list, wherein the list is represented to the user by way of a list interface 40. The capture summary 41, e.g., comprises a verbal description of the captured data visualization 12. In some embodiments, the capture summary 41 is manually provided, in other embodiments, the capture summary may be generated automatically, e.g., by natural language generation based on the analysis result. The list of capture summaries 41 provides the user a comprehensive overview over which data visualizations 12 are being captured and saved.

The configuration comprises operations 15 such as filters, annotations, accumulations, sorting, and selections, and combinations thereof.

In this example, the user interface provides an input of at least one parameter 15 which may adapt an interpretation of the recorded process data. The interpretation of the recorded process data is based to the interpretation of process steps within the process data. Often there is no absolute truth for the classification of process steps such that the classification of process steps may be controlled by the at least one parameter 15. Hence, changing and/or tweaking the at least one parameter 15 may directly affect the interpretation of the recorded process data which may lead to a different query result 2 and therefore also forms part of the configuration 3.

The example of Fig. 2 highlights that original data visualizations 12 may be captured on a granular basis according to an aspect of the invention thereby enabling a user-curated collection of captured data visualizations 22 in the insight view 20. Each captured data visualization freezes the underlying data as well as the state of the original data visualization 12, the applied filters, and user inputs such as annotations, in time. Hence, the captured interesting data point of an original data visualization 12 gets preserved in the same state as it was discovered.

**Fig. 3** illustrates an example for a collaborative capture of a query result according to an aspect of the invention.

Fig. 3 illustrates two captures of original data visualization 12; 14 at different points in time by two users, user 1 and user 2. For the sake of this example, the two users work on the same process mining question 11 at different times. In general, two or more users may also collaborate on two or more process mining questions 11 and compose a collection of captured insights 22; 24 from original data visualizations scattered across answers to several process mining questions 11 at any point in time.

User 1 selects a first original data visualization 12 which is captured by storing the corresponding query result 2, configuration 3 and query statement 4 in a first logical component 5. A copy 22 of the original data visualization 12 is generated and provided by the second graphical interface 20, also termed shared insight.

User 2 selects a second original data visualization 14. The second original data visualization 14 is captured by storing the corresponding query result 2, configuration 3 and query statement 4 in a second logical component 5. A copy 24 of the original data visualization 14 is generated and provided by the insight view 20. Hence, the two data visualization copies 22; 24 represent exactly the state of the original data visualizations 12; 14 at their respective time of capture and their respective input of the at least one parameter 15.

The functionality of this example is achieved by assigning each original data visualization 12; 14 a logical component 5 in which the corresponding query result 2 and configuration 3 are stored. The query result 2 related to a single original data visualization 12; 14 is usually very small compared to the size of the data model 70 in which the query result 2 is generated. Hence, the storage overhead introduced by storing every received query result 2 is negligible.

The arrow separating the sketch of the exploration views 10 from the insight view 20 indicates the progress of time in this example. User 2 captures her original data visualization 14 later than user 1. Hence, the time interval of the query result 2 on which the first original data visualization 12 is based is smaller than the time interval of the query result 2 on which the second original data visualization 14 is based. Therefore, the original data visualization 12; 14 may show diverging insights although both are generated for the same process mining question 11. This feature may be used in particular in situations in which specific data visualizations are to be captured overtime, e.g., to track the progress of the query result the specific data visualizations represent.

**Fig. 4** illustrates the link from a captured query result to a current query result according to an aspect of the invention.

The example shown in Fig. 4 is very simplified to focus on the aspect of the invention related to the link to live insights. In this example, a user has captured a single data visualization at time t1, of which a copy 22 is visualized in the insight view 20. The data visualization copy 22 represents a KPI which has a value of 23% at time t1.

The data visualization copy 22 is generated on basis of the stored query result 2 and a corresponding configuration 3 as outlined above. In this example, the query statement 4 which was used to generate the query result 2 is also stored in the storage device 50. This method step corresponds to the dashed arrow in Fig. 1 connecting the symbol representing the query statement 4 to the symbol representing the storage device 50.

At a later point in time t2, wherein t2 is larger than t1, the identical captured insight is generated from the stored query result 2 and the corresponding configuration 3 by the executor 60. With storing the query statement 4 additionally in the storage device 50, a link to the corresponding insight based on current process data is available.

As mentioned above, the process data is accumulated continuously, and the amount of process data transformed into the at least one data model 70 grows accordingly. Hence, the insight captured at time t1 may be outdated at time t2. However, by way of the link provided by the stored query statement 4, a user may trigger an execution of the stored query statement 4 in the updated data model 70 thereby generating a new and/or live query result 6.

In the example of Fig. 4, the new query result 6 manifests itself by a change in the KPI value from 23% to 15%. The new query result 6 is represented in a data visualization 32 of a third graphical interface 30 using the same configuration 3 which is stored in the respective logical component 5 of the captured data visualization 12. The third graphical interface 30 is also termed live insight view. In some embodiments, the third graphical interface 30 corresponds to the first graphical interface 10, meaning that the new query result 6 is represented in the explorations view.

In other embodiments, the third graphical interface 30 may be represented in a way that enables the user to directly compare the new query result 6 to the stored query result 2. In other words, representing a new query result 6 using the same configuration 3 next to the data visualization copy 22 enables a one-to-one comparison between the live insight and the shared insight.

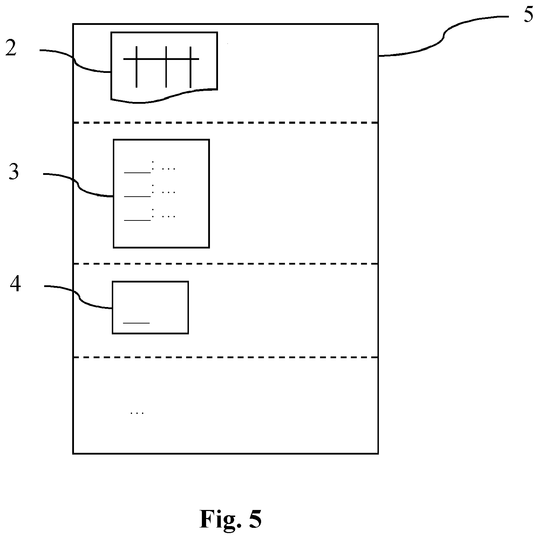

**Fig. 5** illustrates a schematic of an embodiment of the logical component.

The logical component 5 has the function of a container for the data required to generate a copy 22; 24 of the captured data visualization. The logical component 5 comprises at least two attributes. In a first attribute, the received query result 2 is stored. In a second attribute, the received configuration 3 is stored. In case the logical component 5 further comprises a third attribute, the at least one query statement on basis of which the received query result 2 was generated, is stored in the third attribute.

Assigning each captured data visualization 12; 14 to a logical component 5 has the advantage, that the corresponding data visualization copies 22; 24 may be generated efficiently, since every logical component contains a complete data bundle required to reproduce the data visualization in the insight view 20. Further, the data visualization copies 22; 24 may be collaboratively combined into the insight view 20, annotated, and shared.

### List of reference numerals:

- 1: user interface
- 2: query result
- 3: configuration
- 4: at least one query statement
- 5: logical component
- 6: current query result

- 10: first graphical interface of the user interface 1
- 11: process mining approach
- 12: first data visualization
- 13: selection input
- 14: second data visualization
- 15: operation on the query result 10 and the current query result 16

- 20: second graphical interface of the user interface 1
- 22: copy of the first data visualization 12
- 24: copy of the second data visualization 14

- 30: third graphical interface of the user interface 1
- 32: current data visualization

- 40: list interface of the user interface 1
- 41: capture summary

- 50: storage device
- 60: executer
- 70: at least one data model

## Claims

1. Computer-implemented method to capture a data visualization (12; 14) of continuously accumulating process data, the method comprising:
- receiving a query result (2) generated by executing at least one query statement (4) on the process data,
- receiving a configuration (3) for the visualization,
- storing the query result (2) and the configuration (3) in a storage device (50),
- loading, by way of an executer (60), the stored query result (2) and the stored configuration (3),
- generating, by way of the executer (60), a copy of the data visualization (22; 24) using the loaded query result (2) and the loaded configuration (3), and
- Providing the copy of the data visualization (22; 24) by way of a second graphical interface (20) of a user interface (1).

2. The method of claim 1, further comprising:
- receiving the at least one query statement (4), and
- storing the at least one query statement (4) in the storage device (50).

3. The method of claim 2, further comprising
- generating, on request of a user, a current query result (6) by executing the at least one stored query statement (4) on the process data,
- loading, by way of the executer (60), the configuration (3),
- generating, by way of the executer (60), a current data visualization (32) using the current query result (6) and the loaded configuration (3), and
- providing the current data visualization (32) by way of a third graphical interface (30) of the user interface (1).

4. The method of claim 1, wherein the data visualization (12; 14) is generated during execution of a process mining question (11) for an analysis of the process data.

5. The method of claim 1, wherein the at least one stored query statement (4) is executed, by way of the executer (60), on at least one data model (70) which is generated from the process data and updated continuously.

6. The method of claim 1, further comprising generating a logical component (5), which is stored in the storage device (50) and assigned to the data visualization (12; 14) , wherein the query result (2) and the configuration (3) are stored in at least one attribute of the logical component (5).

7. The method of claim 6, wherein
- a first graphical interface (10) of the user interface (1) comprises a number of data visualizations (12; 14),
- each data visualization (12; 14) comprises a selection input (13) by which the data visualization (12; 14) is selectable to be captured, and
- the method further comprises storing, upon activating the selection input of at least one data visualization (12; 14), the query result (2) and the configuration (3) of the respective data visualization (12; 14) in the at least one attribute of the corresponding logical component (5) such that the copy of each selected data visualization (22; 24) is generatable independently.

8. The method of claim 7, wherein the user interface (1) comprises a list interface (40), wherein the method further comprises generating a capture summary (41) for each selected data visualization (12; 14), wherein the capture summary is in particular a verbal description of the selected data visualization (12; 14) and providing a list of capture summaries (41) by way of the list interface (40).

9. The method of claims 2 and 6, wherein the at least one query statement (4) is stored in the at least one attribute of the logical component (5) in the storage device (50).

10. The method of claim 1, wherein the configuration (3) comprises a number of operations (15) of a group of operations, the group consisting of:
- filters,
- annotations,
- accumulations,
- sorting,
- selections, and
- combinations thereof.

11. The method of claim 1, wherein the configuration (3) is stored in a generic configuration file in the storage device (50).

12. The method of claim 1, wherein the query result (2) and the configuration (3) of a first data visualization (12) are stored in the storage device (50) at a first point in time, wherein the query result (2) and the configuration (3) of a second data visualization (14) are stored in the storage device (50) at a second point in time, wherein the method further comprises:
- generating, by way of the executer (60) at a time after the second point in time, a copy of the first data visualization (22) and a copy of the second data visualization (24), and
- providing, by way of the second graphical interface (20), the copy of the first data visualization (22) and the copy of the second data visualization (24).

13. The method of claim 12, wherein the second data visualization (14) is equal to the first data visualization (12).

14. The method of claim 6, wherein the logical component (5) comprises at least
- a first attribute, in which the query result (2) is stored,
- a second attribute, in which the configuration (3) is stored, and
- a third attribute, in which the at least one query statement (4) is stored.
